Europäisches Patentamt

European Patent Office

Office européen des brevets

(11) Veröffentlichungsnummer: **0 377 215 B1**

(12) **EUROPÄISCHE PATENTSCHRIFT**

(45) Veröffentlichungstag der Patentschrift: **18.08.93**

(21) Anmeldenummer: **89124055.8**

(22) Anmeldetag: **28.12.89**

(51) Int. Cl.⁵: **A01B 63/10**, G05B 19/405

(54) **Verfahren und Vorrichtung zum Eichen eines Steuersystem.**

(30) Priorität: **06.01.89 US 294537**

(43) Veröffentlichungstag der Anmeldung:
**11.07.90 Patentblatt 90/28**

(45) Bekanntmachung des Hinweises auf die
Patenterteilung:
**18.08.93 Patentblatt 93/33**

(84) Benannte Vertragsstaaten:
**DE FR GB IT**

(56) Entgegenhaltungen:
**DE-A- 2 041 544**
**GB-A- 2 093 676**
**US-A- 4 518 044**

(73) Patentinhaber: **DEERE & COMPANY**
**1 John Deere Road**
**Moline, Illinois 61265(US)**

(72) Erfinder: **Boe, Thomas Eugene**
**RR no. 4**
**Cedar Falls Iowa 50613(US)**
Erfinder: **Bergene, Mark Allen**
**3722 Veralta Drive**
**Cedar Falls Iowa 50613(US)**
Erfinder: **Kittle, Carl Edwin**
**2312 Primrose**
**Cedar Falls Iowa 50613(US)**
Erfinder: **Sparks, Gregory Evan**
**32623 Barton Avenue**
**Waterloo Iowa 50701(US)**

(74) Vertreter: **Feldmann, Bernhard et al**
**DEERE & COMPANY European Office Patent**
**Department**
**D-68140 Mannheim (DE)**

EP 0 377 215 B1

**Beschreibung**

Die Erfindung betrifft ein Eichverfahren und ein Steuersystem zur Durchführung des Verfahrens nach dem Oberbegriff des Patentanspruches 1 bzw. 5. Ein entsprechendes Steuersystem ist durch die US-A-4 518 044 bekannt geworden. Das erfindungsgemäße Verfahren dient insbesondere dem Eichen eines auf einem Fahrzeug installierten Steuersystems, beispielsweise eines Steuersystems für Anhängevorrichtungen, zur Regelung der Arbeitstiefe eines an einen Schlepper angekuppelten Arbeitsgerätes in Abhängigkeit verschiedener erfaßter, beziehungsweise von einer Bedienungsperson einstellbarer Parameter.

Auf das Fahrzeug angepaßte elektronische Steuersysteme weisen in der Regel eine größere Flexibilität hinsichtlich ihrer Gestaltung auf als mechanische Steuersysteme, die sie ersetzen. Sie erfordern einige Mittel, durch die die Systemkonfiguration des Fahrzeuges definiert wird. Ferner müssen die elektronischen Erfassungsvorrichtungen geeicht werden, so daß jede Erfassungsvorrichtung einen bekannten Spannungsbereich aufweist und die Beziehung zwischen Eingangsspannung und dem tatsächlichen Parameterwert bestimmt werden kann. Die meisten elektronischen Systeme erfüllen die Systemkonfiguration durch die Verwendung von DIP-Schaltern, welche manuell eingestellt werden, wenn das Steuersystem installiert wird. Der Eingangsspannungsbereich wird durch Definition eines "typischen" Wertes festgelegt, woraufhin durch manuelle Einstellung des Eingangssensors sichergestellt wird, daß das Sensorausgangssignal mit dem vorherbestimmten Eingangsbereich zusammenpaßt.

Eine zweite Methode zur Eichung und Konfiguration eines auf einem Fahrzeug installierten elektronischen Systems liegt darin, einen speziellen Eichcomputer in das Bordsystem einzustecken, der Eich- und Konfigurationsdaten an das Steuergerät liefert. Diese zweite Lösung läßt sich gut am Ort der Herstellung des Fahrzeuges verwenden; sie erfordert jedoch teure Spezialausrüstung in einer Servicewerkstatt.

Die mit der Erfindung zu lösende Aufgabe wird darin gesehen, ein Eichverfahren und ein elektronisches Steuersystem für eine Anhängevorrichtung mit automatischer Eich- und Konfigurationsfähigkeit bereitzustellen.

Eine andere mit der Erfindung zu lösende Aufgabe wird darin gesehen, eine derartige Eichfähigkeit bereitzustellen, die keine Zusatzausrüstung oder manuelle Sensoreinstellung erfordert.

Die Aufgabe wird erfindungsgemäß durch die kennzeichnenden Merkmale des Patentanspruches 1 bzw. 5 gelöst. Die vorliegende Erfindung schließt einen Mikroprozessor ein, der einen Steueralgorithmus zur Steuerung der Anhängevorrichtung sowie einen Eich- und Konfigurationsalgorithmus ausführt.

Der Eich- und Konfigurationsalgorithmus wirkt so, daß er die Sensorbereiche aller Sensoren, die eingebaut sind, festsetzt und bestimmte Konfigurationsmerkmale unwirksam macht, sofern die zugehörigen Sensoren nicht vorhanden sind. Der Algorithmus führt ferner während des Eichverfahrens einen Funktionstest des Steuersystems durch. Es wird keine besondere Ausrüstung, die nicht bereits Teil des Steuersystems ist, benötigt.

Während der Eichung wird einem schrittweisen Verfahrensablauf gefolgt, welcher das Steuersystem veranlaßt, die Hydraulikventile so zu betätigen, daß die Anhängevorrichtung über ihren vollen Bereich angehoben und abgesenkt werden kann. Zusätzliche Schritte veranlassen das Steuersystem, die Hydraulikventile zu öffnen und langsam zu schließen, um die Ventilvorspannung (Ansprechschwellenwert) für das Druckventil und das Rückflußventil zu etablieren.

Der Hubwellensteuerhebel wird in eine Lage eingestellt, welche das Hubwellenzylindervolumen des Schleppers und damit die Ventilverstärkungen und -Grenzwerte abgrenzt. Eine sekundäre Steuerung (Zuglast/Tiefen-Mischung) wird dann verwendet, um die Zugkraftsensorverstärkung festzusetzen. Wenn dieses Verfahren beendet ist, werden aus dem Bewegungsbereich der Eingangssensoren Normierungsgleichungen bestimmt und im EEPROM gespeichert. Am Ende der Eichung speichert das System auch die festgesetzten Ventilverstärkungen und macht alle Sensoren wirkungslos, die nicht mit dem System während der Eichung in Verbindung standen.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1    eine vereinfachte schematische Darstellung eines landwirtschaftlichen Schleppers, der mit der vorliegenden Erfindung ausgerüstet ist,

Fig. 2    ein elektrisches und hydraulisches Diagramm der vorliegenden Erfindung.

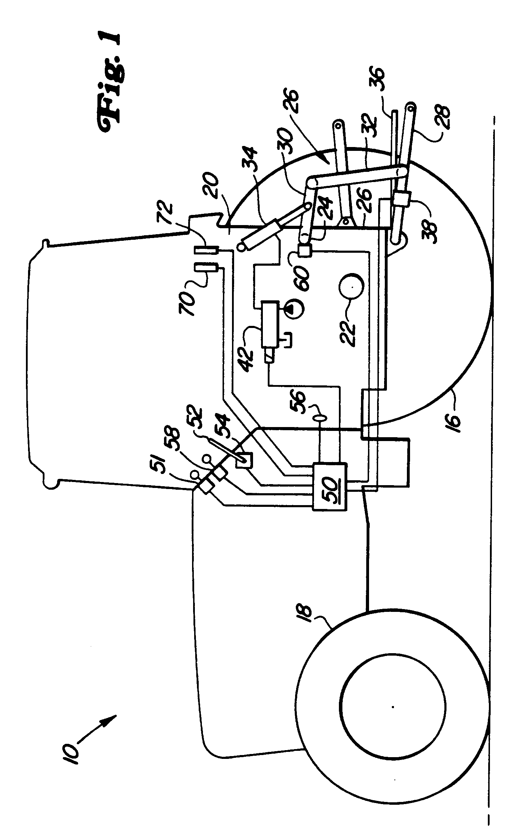

Der in Fig. 1 dargestellte Ackerschlepper 10 enthält ein rückwärtiges Gehäuse 20, an welchem sich eine Hinterradachse 22 und eine Hubwelle 24 abstützen. Eine Geräteanhängevorrichtung 26, beispielsweise eine konventionelle Dreipunktaufhängung, umfaßt Unterlenker 28, welche über Hubspindeln 32 mit Hubarmen 30 verbunden sind. Die Hubarme 30 ihrerseits sind mit der Hubwelle 24 so verbunden, daß sie eine gleichzeitige und gleichartige Bewegung sicherstellen. Sie lassen sich durch zwei parallel liegende hydraulische Hubwellenzylinder 34 anheben und absenken. Ein Zugpendel 36 erstreckt sich von dem Gehäuse 20 nach hinten. Der Schlepper 10 und die Geräteanhängevorrichtung 26 sind lediglich beispielhaft dargestellt. Für den Fachmann ist es ersichtlich, daß die Erfindung sich auch auf Schlepper und Anhängevorrichtungen anderer Ausbildung und auf andere Steuersysteme, wie beispielsweise eine Motorsteuerung, anwenden läßt. Beispielsweise kann die vorliegende Erfindung auch bei gelenkigen vierradgetriebenen Schleppern oder bei Breitspurschleppern mit Vorderradantrieb benutzt werden.

Ein einteiliges in den Boden eingreifendes Arbeitsgerät (nicht dargestellt), wie z. B. ein Streichblechpflug oder ein Meißelpflug, kann auf übliche Weise an den Unterlenkern 28 montiert werden. Alternativ dazu kann ein gezogenes Arbeitsgerät (nicht dargestellt) an dem Zugpendel 36 angekuppelt werden. Ein Zugkraftsensor 38 ist in ein nicht dargestelltes Verbindungsstück zwischengeschaltet, welches anstelle des Zugkraftfühlzylinders einer üblichen hydromechanischen Anhängevorrichtung eingefügt ist und der Erfassung der Zugkraft, welche von dem einteiligen Arbeitsgerät auf die Unterlenker 28 übertragen wird, dient. Der Zugkraftsensor kann auch in einem beliebigen Zugglied oder einem hiermit verbundenen Glied angeordnet sein. Im Falle eines geschleppten Anhängegerätes kann die Zugkraft durch einen Kraftsensor, der im Zugpendel 36 zwischengeschaltet ist, oder mit einer Anhängevorrichtung, welche an die Hubspindeln gekoppelt ist, ermittelt werden. In beiden Fällen kann jeder geeignete bekannte Zugsensor Anwendung finden, z. B. das Modell GZ-10, welches durch Revere Corporation of America hergestellt wird.

Die hydraulische Verbindung zu und von den Zylindern 34 oder zu und von den nicht dargestellten entfernt liegenden Zylindern eines gezogenen oder halbintegralen Arbeitsgerätes wird durch ein Paar hydraulischer Strömungssteuerventile 42a und 42b gesteuert, welche durch Magnetspulen betätigt werden und von einer Steuereinheit 50 mit elektrischen Steuersignalen angesteuert werden. Bei dem Strömungssteuerventil 42 kann es sich um solche handeln, wie sie in der EP 0 325 958 A1, auf die hiermit hinsichtlich der Offenbarung Bezug genommen wird, beschrieben wurden. Es kann jedoch auch ein anderes handelsübliches Ventil Verwendung finden.

Ein von der Bedienungsperson betätigbarer Steuerhebel 52 steht mit einem Wandler 54 (beispielsweise ein Potentiometer) in Verbindung, welcher eine Führungsgröße erzeugt. Diese Führungsgröße entspricht einer gewünschten Einstelllage der Anhängevorrichtung, einer gewünschten Zugkraft oder einer Kombination von beiden. Das Ausmaß der Kombination läßt sich mit einem Zuglast/Tiefen- oder Misch-Steuerpotentiometer 56 einstellen. Ein oberes elektrisches Grenzsignal wird durch ein von der Bedienungsperson einstellbares Potentiometer 51 erzeugt. Ferner ist ein handbetätigbares Potentiometer 58 zur Einstellung der Senkgeschwindigkeit vorgesehen.

Ein Lagewandler 60, beispielsweise ein übliches Drehpotentiometer, erzeugt ein Lagemeßsignal, welches die aktuelle Lage der Hubwelle 24 repräsentiert. Es kann auch ein Lagerückkopplungssignal von dem Hubwellenzylinder 34 oder von einem entfernt liegenden Hubzylinder erhalten werden, sofern der Zylinder einen Lagewandler enthält, wie er beispielsweise in der US-PS 3,726,191 beschrieben ist.

Ferner kann ein zweipoliger Hebe/Senk-Umschalter 70 außerhalb der Schlepperkabine in der Nähe der Anhängevorrichtung befestigt sein, so daß die Bedienungsperson die Anhängevorrichtung von einem Ort außerhalb der Kabine aus anheben und absenken kann. Ein Eichumschalter 72 befindet sich innerhalb der Kabine.

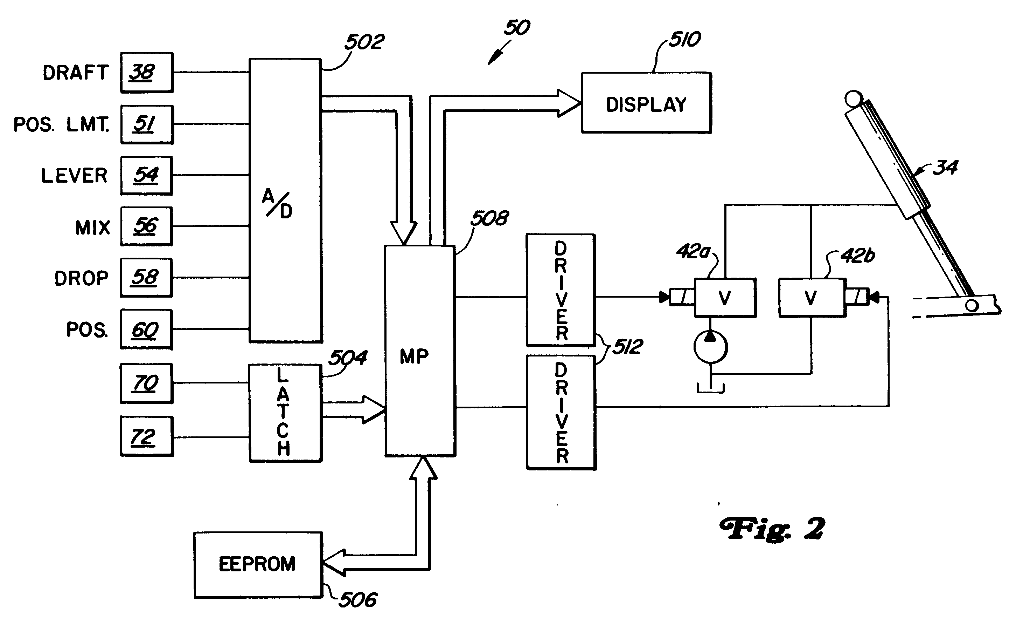

Bezugnehmend auf Fig. 2 enthält die Steuereinheit 50 einen Analog/Digital-Umsetzer 502, ein Latch 504 (Flip-Flop-Register), einen elektrisch löschbaren programmierbaren Festwertspeicher (EEPROM) 506, einen Mikroprozessor 508 mit einem nicht dargestellten Integralzeitgeber und zwei Ventilsteuereinheiten 512. Bei den Ventilsteuereinheiten kann es sich um beliebige übliche pulsweitenmodulierte Ventilstromsteuereinheiten oder andere handelsübliche Ansteuereinheiten für Magnetventile handeln. Es, werden jedoch solche bevorzugt, wie sie in der EP-A-0 377 214, auf welche hiermit bezüglich der Offenbarung Bezug genommen wird, beschrieben sind. Die Analogsignale der Sensoren bzw. Potentiometer 38, 51, 54, 56, 58 und 60 werden im Analog/Digital-Umsetzer in digitale Signale umgewandelt und dann dem Mikroprozessor 508 zugeführt. Das Latch 504 verbindet den Hebe/Absenk-Umschalter 70 und den Eichumschalter 72 mit dem Mikroprozessor 508. Das EEPROM 506 speichert Eichdaten, welche in einem Eichverfahren gemäß der vorliegenden Erfindung verwendet werden.

Die Steuereinheit 50 führt einen Steueralgorithmus zur Steuerung der Anhängevorrichtung aus, wie er im einzelnen in der EP-A-0 377 216 auf welche hiermit bezüglich der Offenbarung Bezug genommen wird, beschrieben wurde. Die Steuereinheit führt darüber hinaus ein Eich- und Konfigurations-Computerprogramm durch, welches Gegenstand der vorliegenden Erfindung ist und im folgenden näher beschrieben wird.

Die Eich- und Konfigurations-Software stellt eine Konfigurationsoption für die Zugkrafterfassung bereit, bei der das Steuersystem für die Anhängevorrichtung aus einem, zwei oder keinem Zugkraftsensor 38 zusammengestellt sein kann. Sind keine Zugkraftsensoren ausgewählt, so liefert das System keine Lasterfassungsoption. Die Zugkraftsensorverstärkung kann dann durch den Techniker während der Eichung ausgewählt werden. Das Nullsignal für den nicht vorhandenen Zugkraftsensor wird während des Eichvorganges eingelesen und gespeichert. Sind zwei Zugkraftsensoren verfügbar, so verwendet das Steuersystem der Anhängevorrichtung den Mittelwert dieser beiden Sensoren als Zugkraftbelastung. Das System enthält ferner eine Option für den hinteren Hebe/Absenk-Umschalter 70, wobei diese Option durch das Eichprogramm festgestellt werden kann. Ist kein entsprechender Umschalter vorhanden, so wird diese Option beseitigt.

In einer Option für die Auswahlkonfiguration des Hubwellenzylindervolumens können die Ventilparameter, welche die Durchflußgeschwindigkeit und die Änderung der Durchflußgeschwindigkeit bestimmen, während der Eichung so eingestellt werden, daß die Anhängevorrichtung für unterschiedliche Volumen des Hubwellenzylinders ausgelegt werden kann. Zusätzlich können einige Kundenanpassungen bezüglich der Durchflußmenge vorgenommen werden, um die Anhängevorrichtung an die speziellen Anforderungen anzupassen.

In einer Option für eine Meßkonfiguration für die Ventilvorbelastung bestimmt die Eichung den Strom, der erforderlich ist, um die Vorbelastung des Steuerventiles 42a, 42b zu überwinden. Dieser Wert wird gesichert und dazu verwendet, einen Summanden für alle Ventilsteuerbefehle während eines normalen Betriebes zu liefern. Dies ermöglicht es, die Systemhysteresis zu vermindern, die durch die Steuerventile hervorgerufen wird.

In einer automatischen Sensorvorspannungs-Eichbetriebsweise wird während des Eichprogrammablaufes automatisch der Bereich der Ausgangsspannung jedes mit dem Steuersystem der Anhängevorrichtung verbundenen Sensors 51, 54, 56, 58 und 60 bestimmt. Dies bewirkt eine Selbsteinstellung, die von dem Erfordernis einer mechanischen Einstellung der Sensorverbindung befreit. Sie ermöglicht ferner eine flexible Verwendung unterschiedlicher Sensorbereiche für unterschiedliche Schleppertypen.

Da für Eichverfahren der Betrieb aller Steuersystemelemente erforderlich ist, erfolgt eine Funktionsprüfung des Steuersystems während des Eichverfahrens.

Das Eichverfahren ist eine besondere Betriebsart, die durch den Eichumschalter 72 in Betrieb gesetzt wird. Dieser Schalter 72 kann an beliebiger Stelle im Schlepper, vorzugsweise jedoch in dessen Kabine, angeordnet sein. Ist der Eichbetrieb gewählt, so kann ein Techniker das Steuersystem der Anhängevorrichtung durch Befolgen eines speziellen Eichverfahrens gestalten. Am Ende der Eichung muß der Eichumschalter 72 in seine normale Stellung zurückgedreht werden, wodurch das Eichprogramm den Befehl auslöst, die Eichdaten in den nicht flüchtigen Speicher 506 (EEPROM) einzulesen. Diese Eichdaten enthalten Informationen über die Steigung und einen ausgewählten Meßwertabschnitt für alle Eingabesensoren sowie über die eingestellten Ventilparameter in bezug auf das jeweilige Hubwellenzylindervolumen.

Es ist auch ein nicht dargestellter Eichtaktgeber enthalten, der dafür sorgt, daß Schalterstoßimpulse und Schaltungsfehler der Verdrahtung nicht zu einem Verlust der Eichung führen. Dieses Merkmal kann verwendet werden, um frühere Eichergebnisse zurückzurufen, wodurch Fehlerfunktionen des Anhängevorrichtungssystems festgestellt werden können.

Das Eichprogramm der Anhängevorrichtung wird durch eine Hauptsteuerschleife aufgerufen, wenn der Eichumschalter 72 in seine Eichstellung gebracht wird. Wird der Eichumschalter 72 in seine normale Lage zurückgestellt, werden die Eichinformationen in einem dauerhaften Speicher 506 (EEPROM) gespeichert. Diese Eichdaten werden dann von dem normalen Algorithmus verwendet, um die Eingangsdaten aller Sensoren zu normieren. Die Normierungsgleichung hat die Form:

$$Y = M \times (X - B)$$

wobei

Y     der normierte Ausgangswert ist,

M     eine Steigung ist, die durch das Eichprogramm bestimmt wird,

X     der Sensoreingangswert ist, der von der Analogeingangseinrichtung gelesen wird, und

B     der X-Abschnitt (oder die Nullablesung des Sensors), die durch das Eichprogramm gespeichert wurde.

Ferner kann das Algorithmuseinleitungsprogramm nicht geeichte Sensoren aufspüren und diese markieren, so daß der normale Algorithmus sie ignoriert. Die Ventilparameter, die durch das Eichprogramm festgesetzt sind, stellen Grenzwerte für die Ventilverstärkung, den Ventilstrom sowie die Kompensationen bereit, die erforderlich sind, um die Ventilvorbelastungen zu überwinden.

Steht der Eichumschalter 72 in der Eichstellung, so überwacht das Eichprogramm alle Sensoreingangswerte. Diese Eingangswerte werden mit einer gespeicherten Wertetafel für Mindest- und Höchstwerte verglichen. Die Wertetafel wird verwendet, um während des Eichvorganges für alle Sensoren einen minimalen und maximalen Sensoranzeigewert bereitzustellen. Wenn die Eichung vollendet ist, werden diese Sensoranzeigewerte verwendet, um eine Sensoreichung festzusetzen, welche bei dem normalen Steueralgorithmus verwendet wird. Die Werte dieser Minima und Maxima werden verwendet, um das Vorliegen eines Optionssensors festzustellen. Die Minima und Maxima werden für die Zugkraftsensoren 38 in unterschiedlicher Weise verwendet als für alle anderen Sensoren.

Der Mittelwert aus Minimum und Maximum jedes Zugkraftsensors wird verwendet, um eine Nullanzeige für die Zugkraft festzusetzen. Die Steigung des Zugkraftsensors wird durch die Bedienungsperson durch Einstellen des Mischsteuerpotentiometers 56 eingestellt. Weichen die minimalen und maximalen Meßwerte des Zugkraftsensors um mehr als 0,5 Volt ab, so wird der Zugkraftsensor als ausgefallen betrachtet. Die maximale Nullablesung des Zugkraftsensors und die Steigung des Zugkraftsensors werden verwendet, um den Sensoranzeigewert auf 133 % der Nennzugkraft zu projizieren. Überschreitet dieser Wert 4,69 Volt, so wird der Zugkraftsensor als ausgefallen betrachtet. Desgleichen wird der Zugkraftsensor als ausgefallen betrachtet, wenn die minimale Nullablesung des Zugkraftsensors und die Zugkraftsensorsteigung einen auf -67 % der Nennzugkraft projizierten Anzeigewert von weniger als 0,31 Volt ergibt. Da ein ausgefallener Sensor durch den Hauptalgorithmus unwirksam gemacht wird, kann eine "außerhalb des Bereiches" liegende Nullablesung verwendet werden, um anzuzeigen, daß kein Sensor vorhanden ist. Dies kann dadurch erreicht werden, daß der Sensoreingang geerdet wird.

Bei fehlendem Zugkraftsensoreingangssignal werden das Sensorminimum und das Sensormaximum verwendet, um eine Null und eine Steigung für einen Normierungsprogrammablauf des Hauptalgorithmus zu entwickeln. Die Differenz zwischen dem Sensorminimum und dem Sensormaximum muß größer sein als 1,5 Volt, sonst wird der Sensor nicht geeicht. Sind die Sensorminima kleiner als 0,31 Volt oder sind die Sensormaxima größer als 4,69 Volt, so wird der Sensor als ausgefallen betrachtet. Ist der Bewegungsbereich des Sensors kleiner als 0,5 Volt, wird der Sensor als nicht geeicht betrachtet, und die vorhergehende Eichung wird beibehalten. Ist der Bewegungsbereich des Sensors größer als 0,5 Volt, aber kleiner als 1,5 Volt, so wird der Sensor als ausgefallen betrachtet, und es werden keine Eichdaten gespeichert. Wie bei den Zugkraftsensoren werden auch andere Arten von Sensoren durch den Hauptalgorithmus unwirksam gemacht, so daß eine "außerhalb des Bereiches" liegende Nullablesung verwendet werden kann, um eine Sensoroption zu definieren. Dies kann dadurch erreicht werden, daß der Sensoreingang geerdet wird.

Der hintere Hebe/Absenk-Umschalter 70 weist einen gewöhnlich geschlossenen und einen gewöhnlich offenen Kontakt für jede Lage (angehoben oder abgesenkt) auf. Ist kein Schalter vorhanden, so sind diese Eingänge alle offen. Dieser Zustand wird als Kennzeichen (Flag) verwendet, um dem Algorithmus mitzuteilen, daß die hintere Hebe/Absenk-Schalteroption nicht vorhanden ist.

Um den minimalen und maximalen Sensoranzeigewert der Betätigungseingänge 51, 54, 56, 58 zu bestimmen, werden die Betätigungen (Steuerhebel und Potentiometer) über ihren vollen Bewegungsbereich verstellt. Der Lagesensor 60 für die Anhängevorrichtungslage kann jedoch am besten unter Verwendung des Steuersystems für die Anhängevorrichtung über seinen Ausschlagsbereich mittels des Steuersystems für die Anhängevorrichtung verstellt werden. Ebenso kann die Ventilvorlast am besten dadurch bestimmt werden, daß ein bekannter Strom angelegt wird und die Durchflußmenge der Ventile 42a und 42b gemessen wird. Dies kann am Schlepper durchgeführt werden, indem das Steuersystem der Anhängevorrichtung verwendet wird, um den Strom anzulegen und die Durchflußmenge mittels des Lagesensors 60 zu messen. Die Einstellung der vom Kunden gewünschten Anhebegeschwindigkeit kann ebenfalls so erfolgen, daß das Steuersystem der Anhängevorrichtung derart eingestellt wird, daß die gewünschte Anhebegeschwindigkeit erhalten wird, die dann abgespeichert wird.

Die Bewegung der Anhängevorrichtung wird für die normale Eichung durch Verwendung des Hubwellensteuerhebels 52 in der Betriebsart eines offenen Regelkreises durchgeführt. Das heißt, wird der Hebel 52 in die untere Hälfte des Hebelschlitzes (nicht dargestellt) gebracht, öffnet das Rückflußventil 42b, und wenn der Hebel in die obere Hälfte des Hebelschlitzes gebracht wird, öffnet das Druckventil 42a. Der Steuerbefehl ist proportional zu dem Abstand von der Mitte des Schlitzes. Der Ventilsteuerbefehl ist also variabel zwischen der Stellung "Aus" in der Mitte bis zur Stellung "Voll ein" an einem der Enden des Schlitzes. Mit dieser Art der Ventilsteuerung kann die Anhängevorrichtung gezielt so angehoben und abgesenkt werden, daß das Eichprogramm das Minimum und das Maximum des Lagepotentiometers der Anhängevorrichtung erfassen und einlesen kann.

Die Ventilvorlaststromwerte werden dadurch ermittelt, daß das Ventil 42a oder 42b so lange geöffnet wird, bis eine Bewegung der Anhängevorrichtung einsetzt, woraufhin das Ventil wieder langsam geschlossen wird, bis die Bewegung beendet ist. Diese Vorlasteichung wird durch die Bedienungsperson aktiviert.

Sie kann vorgenommen werden, wenn die Anhängevorrichtung sich an einem Grenzwert befindet und der Hebel 52 sich an demselben Grenzwert befindet. Eine Verstellung der Anhebegrenze mit dem Potentiometer 51 von einem Ende zum anderen Ende aktiviert die Ventilvorlasteichung. Welches Ventil geeicht wird, hängt davon ab, in welcher Lage sich die Anhängevorrichtung (und der Hebel) befindet. Ist die Anhängevorrichtung ganz oben, so wird das Rückflußventil 42b geeicht, ist sie ganz unten, so wird das Druckventil 42a geeicht.

Die Eichung der Aufwärtsgeschwindigkeit der Anhängevorrichtung, d. h. die Geschwindigkeit, mit welcher das Steuersystem die Anhängevorrichtung anhebt, kann durch Verwendung des Senkgeschwindigkeitspotentiometers 58 eingestellt werden. Diese Steuerung erlaubt zwei Optionen. Bei einer normalen Betriebsart wird das Senkgeschwindigkeitspotentiometer 58 von einem Anschlag zum anderen verstellt, nachdem das Steuerhebelpotentiometer 54 und das Lagepotentiometer 60 geeicht und die Ventilvorlast bestimmt wurde. Dies liefert die "Standard"-Hebegeschwindigkeit. Eine zweite Betriebsart besteht darin, daß als erstes Potentiometer das Senkgeschwindigkeitspotentiometer 58 verstellt wird. Dies liefert eine Eichung, die lediglich die Hebegeschwindigkeit betrifft. Ist diese Betriebsart gewählt, so sind keine anderen Eichungen bestimmt oder gespeichert. Da die Zugkraftsensornullpunkte und die Eichungen der Anhängevorrichtungslage nicht registriert werden, kann dieses Verfahren der Hebegeschwindigkeitseichung bei installiertem Anhängegerät durchgeführt werden.

Um die Eichung, die lediglich die Hebegeschwindigkeit betrifft, durchzuführen, müssen folgende Schritte durchgeführt werden:

1. Stelle den Hubwellensteuerhebel voll nach vorn.

2. Stelle die Anhängevorrichtung in Betriebsart Eichen. Ein Code zeigt auf dem Display an, daß die Betriebsart Eichen gewählt wurde.

3. Verdrehe das Senkgeschwindigkeitspotentiometer voll gegen den Uhrzeigersinn, dann voll im Uhrzeigersinn und dann zurück in die mittlere Position. Hierdurch wird die Anhängevorrichtungssteuerung in die Betriebsart Hebegeschwindigkeitseinstellung und der Hebegeschwindigkeitswert auf den Standardwert gesetzt.

4. Bewege den Hubwellensteuerhebel ganz zurück und dann wieder langsam nach vorn. Ist die Anhängevorrichtung nicht ganz unten, so sollte sie sich jetzt ganz absenken. Das Display sollte bei 235 bleiben.

5. Bewege den Hubwellensteuerhebel ganz zurück. Die Anhängevorrichtung wird mit der Standardhebegeschwindigkeit ganz nach oben wandern. Um eine vom Kunden gewünschte Hebegeschwindigkeit einzustellen, drehe das Senkgeschwindigkeitspotentiometer im Uhrzeigersinn, um die Geschwindigkeit zu vergrößern, oder entgegen dem Uhrzeigersinn, um die Geschwindigkeit zu vermindern. Mehr im Uhrzeigersinn vergrößert die Hebegeschwindigkeit mehr und mehr. Entgegen dem Uhrzeigersinn vermindert die Hebegeschwindigkeit weiter. Ist die Hebegeschwindigkeit kleiner als die Standardgeschwindigkeit, so zeigt das Display 234, und ist sie größer als die Standardgeschwindigkeit, so zeigt das Display 236. Setze das Absenken und Anheben der Anhängevorrichtung so lange fort, bis die gewünschte Hebegeschwindigkeit festgelegt ist. Beachte, daß dann, wenn ein schweres Anhängegerät während dieses Tests verwendet wird, der Hebel immer nur sehr langsam nach vorn verstellt werden sollte, um zu verhindern, daß das Anhängegerät zu schnell absinkt.

6. Stelle die Anhängevorrichtung zurück in die normale Betriebsart, in der keine Eichung vorgenommen wird.

Wird die Absenkgeschwindigkeitssteuerung verwendet, um die Hebegeschwindigkeit einzustellen, kann der Steuerhebel 52 der Anhängevorrichtung in der Betriebsart eines offenen Regelkreises betrieben werden, in der die Geschwindigkeit, mit der die Anhängevorrichtung bewegt wird, beobachtet werden kann. Die Einstellung des Senkgeschwindigkeitspotentiometers 58 entgegen dem Uhrzeigersinn vermindert die Hebegeschwindigkeit, und die Einstellung im Uhrzeigersinn vergrößert die Hebegeschwindigkeit. Sofern die Bewertung der Hebegeschwindigkeit abgeschlossen ist, setzt die Einstellung dieses Potentiometers die zu speichernde Hebegeschwindigkeit (Grenzwert des Spulenstromes) fest.

Um die Konfiguration der Anhängevorrichtung flexibel zu gestalten, werden zwei zusätzliche Parameter eingeführt. Es handelt sich um das Hubwellenzylindervolumen und die Zugkraftsensorverstärkung (Steigung). Das Hubkraftzylindervolumen (und zugehörige Ventilverstärkungsglieder) ist festgesetzt durch die Lage, in der sich der Hubwellensteuerhebel 52 entweder am Ende der Eichung oder zur Zeit, zu der das Senkgeschwindigkeitspotentiometer das erste Mal geeicht wird, befindet. Es ist zu beachten, daß dann, wenn der Hubwellensteuerhebel 52 während einer Eichung nicht verstellt wurde, das Ventilverstärkungsglied nicht geändert wird.

Die Zugkraftsensorverstärkung wird nur bei Anhängevorrichtungen mit Zugkrafterfassung gebraucht. Da auch eine Last/Tiefen-Einstellvorrichtung 56 nur bei derartigen Anhängevorrichtungen benötigt wird, legt die

EP 0 377 215 B1

Einstellung der Last/Tiefen-Einstellvorrichtung am Ende der Eichung den Zugkraftsensorverstärkungswert fest.

Um die Flexibilität dieses Eichverfahrens zu erzielen, überwacht das Programm alle Sensoreingangsgrößen und stellt fest, welche Eingangsgröße als letztes verändert wurde. Diese Betätigung wird dann als aktiv betrachtet, so daß das Ansprechen der Anhängevorrichtung die Ausgangsgröße widerspiegelt, die dieser Eingangsgröße entspricht. Betätigungen während der Eichung verhalten sich ganz ähnlich wie Betätigungen während des normalen Betriebes, so daß der Eichtechniker eine Wirkungsweise der Anhängevorrichtung erhält, die der erwarteten Wirkungsweise ähnlich ist. Beispielsweise sind die einzigen Betätigungsvorrichtungen, durch die die Anhängevorrichtung 26 bewegt werden kann, der Hauptsteuerhebel 52 und die Betätigung 51 für die Hebegrenze. Die Anhängevorrichtung bewegt sich bei vorn liegendem Hebel abwärts und bei hinten liegendem Hebel aufwärts. Ein Verdrehen der Betätigung 51 für die Hebegrenze gegen den Uhrzeigersinn führt sowohl bei der Eichung als auch beim normalen Betrieb zu einem Absenken der Anhängevorrichtung 26, und entsprechend führt ein Verdrehen im Uhrzeigersinn in beiden Fällen zu einem Anheben der Anhängevorrichtung. Eine Verstellung irgendeines nicht aktiven Betätigungsorganes führt zum Abschalten des Ausgangssignals der Anhängevorrichtung. Der Steuerhebel 52 muß durch eine Bewegung, die Null überschreitet, entriegelt werden, um die Anhängevorrichtung 26 zu bewegen.

Um das Eich- und Konfigurationsverfahren durchzuführen, hat eine Bedienungsperson folgende Schritte auszuführen:

1. Stelle den Hubwellensteuerhebel voll nach vorn.

2. Stelle die Anhängevorrichtung in Betriebsart Eichen. Ein Code zeigt auf dem Display an, daß die Betriebsart Eichen gewählt wurde.

3. Bewege den Hubwellensteuerhebel ganz zurück und und ganz nach vorn. Ist die Anhängevorrichtung nicht ganz unten, so sollte sie sich jetzt ganz absenken. Entweder 164 oder 165 werden vom Display angezeigt.

4. Bewege den Hubwellensteuerhebel ganz zurück. Die Anhängevorrichtung sollte nun ganz nach oben wandern. Das Display zeigt 100 an.

5. Verwende bei hochgefahrener Anhängevorrichtung die Hebegrenzwertbetätigung, um die Vorlast des Rückflußventils zu bestimmen. Verstelle die Hebegrenzwertbetätigung in die Endlage gegen den Uhrzeigersinn und dann in die Endlage im Uhrzeigersinn. Bewege die Betätigung wieder in die Endlage gegen den Uhrzeigersinn, wobei die Anhängevorrichtung beobachtet wird. Die Anhängevorrichtung sollte sich höchstens ein Viertel runter bewegen und dann anhalten. Bewegt sich die Anhängevorrichtung nicht nach unten, so verstelle die Hebegrenzwertbetätigung zurück in einen mittleren Bereich und wieder in die Endlage entgegen dem Uhrzeigersinn. Nachdem sich die Anhängevorrichtung nach unten bewegt hat und still steht, ändert sich die Anzeige des Display von einer Zahl größer als 100 auf eine Zahl kleiner als 100. Hierdurch wird angezeigt, daß die Vorlast des Rückflußventils bestimmt wurde.

6. Bewege den Hubwellensteuerhebel ganz nach vorn und wieder ganz zurück. Die Anhängevorrichtung bewegt sich jetzt ganz nach oben. Das Display zeigt 100 an.

7. Verwende bei hochgefahrener Anhängevorrichtung die Hebegrenzwertbetätigung, um die Vorlast des Rückflußventils einzustellen. Verdrehe die Hebegrenzwertbetätigung aus der Endlage entgegen dem Uhrzeigersinn in die Endlage im Uhrzeigersinn. Hierdurch wird die Vorspannung des Rückflußventiles, die in Schritt 5 registriert wurde, abgerufen. Bewege die Betätigung in die Endlage entgegen dem Uhrzeigersinn und beobachte die Anhängevorrichtung. Die Anhängevorrichtung wird sich höchstens um ein Viertel nach unten bewegen und dann anhalten. Nachdem die Anhängevorrichtung sich nach unten bewegt hat und zum Stillstand gekommen ist, ändert sich die Anzeige von einer Zahl größer als 100 auf eine Zahl kleiner als 100. Hierdurch wird angezeigt, daß die Vorlast bestimmt wurde.

8. Bewege den Hubwellensteuerhebel ganz nach vorn. Die Anhängevorrichtung bewegt sich nun ganz nach unten. Das Display zeigt 165 an.

9. Verwende bei ganz abgesenkter Anhängevorrichtung die Hebegrenzwertbetätigung, um die Vorlast des Druckventils zu bestimmen. Verstelle die Hebegrenzwertbetätigung in die Endlage im Uhrzeigersinn und dann zurück in die Endlage gegen den Uhrzeigersinn. Bewege das Betätigungsorgan wieder in die Endlage im Uhrzeigersinn und beobachte die Anhängevorrichtung. Die Anhängevorrichtung sollte sich höchstens ein Viertel hoch bewegen und dann anhalten. Bewegt sich die Anhängevorrichtung nicht nach oben, so verstelle die Hebegrenzwertbetätigung zurück in einen mittleren Bereich und wieder in die Endlage im Uhrzeigersinn. Nachdem sich die Anhängevorrichtung nach oben bewegt hat und still steht, ändert sich die Anzeige des Display von einer Zahl größer als 100 auf eine Zahl kleiner als 100. Hierdurch wird angezeigt, daß die Vorlast des Druckventils bestimmt wurde.

10. Bewege den Hubwellensteuerhebel ganz nach hinten und wieder nach vorn. Die Anhängevorrichtung bewegt sich nun ganz nach unten. Das Display zeigt 165 an.

7

EP 0 377 215 B1

11. Verwende bei ganz abgesenkter Anhängevorrichtung die Hebegrenzwertbetätigung, um die Vorlast des Druckventils einzustellen. Verstelle die Hebegrenzwertbetätigung aus der Endlage im Uhrzeigersinn zurück in die Endlage gegen den Uhrzeigersinn. Hierdurch wird die Vorspannung des Druckventiles, die in Schritt 9 registriert wurde, abgerufen. Bewege das Betätigungsorgan in die Endlage im Uhrzeigersinn und beobachte die Anhängevorrichtung. Die Anhängevorrichtung sollte sich höchstens ein Viertel hoch bewegen und dann anhalten. Nachdem sich die Anhängevorrichtung nach oben bewegt hat und still steht, ändert sich die Anzeige des Display von einer Zahl größer als 100 auf eine Zahl kleiner als 100. Hierdurch wird angezeigt, daß die Vorlast bestimmt wurde.

12. Bewege den Hubwellensteuerhebel ganz nach hinten. Die Anhängevorrichtung bewegt sich ganz nach oben. Bewege den Hubwellensteuerhebel langsam nach vorn und beobachte das Display. Stelle den Hebel so ein, daß der für den zu eichenden Schlepper zugehörige Hubwellenvolumenindex erreicht wird. Belasse ihn in dieser Lage, bis die Eichung abgeschlossen ist. Die folgende Tabelle legt die Indexcodes für eine unterschiedliche Anzahl von Hebehilfszylindern dar.

| Schlepper | Anzahl der Zylinder | Display |
|---|---|---|
| Row-crop | 0 | 127 |
| | 1 | 129 |
| | 2 | 131 |
| 4-WD | NA | 137 |

13. Verdrehe das Senkgeschwindigkeitspotentiometer voll entgegen dem Uhrzeigersinn und voll zurück im Uhrzeigersinn. Das Display zeigt 235 an, was bedeutet, daß das Senkgeschwindigkeitspotentiometer geeicht wurde.

14. (Nur für Zugkrafterfassung:) Verdrehe das Last/Tiefen-Potentiometer in seine Endlage entgegen dem Uhrzeigersinn und dann in die Endlage im Uhrzeigersinn. Das Display zeigt nun 233 an. Diese Zahl markiert die Lage des Mischsteuerpotentiometers. Verstelle unter Beobachtung des Displays das Mischsteuerpotentiometer so lange, bis die Indexnummer des Zugkraftsensormeßbereiches den Wert 183 erreicht.

15. Wenn die oben beschriebene Vorgehensweise richtig ausgeführt wurde und kein Fehler während der Eichung festgestellt wurde, wird mit Schritt 17 fortgefahren.

16. Sind Probleme bei dem Versuch, die obige Vorgehensweise durchzuführen, aufgetreten und wird nicht gewünscht, daß die Eichdaten im Memory der Anhängevorrichtungssteuerung aktualisiert werden, so kann der Zündschloßschalter des Schleppers ausgestellt werden, bevor die Anhängevorrichtung wieder in die normale (nicht geeichte) Betriebsart gebracht wird. Hierdurch wird das Eichverfahren vorzeitig abgebrochen und das Eichmemory auf den Zustand zurückgestellt, der vor diesem Verfahren abgespeichert war.

17. Stelle die Anhängevorrichtung zurück in die normale Betriebsart, in der keine Eichung vorgenommen wird.

Auch wenn die Erfindung lediglich anhand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen, wie sie in den Ansprüchen definiert ist.

**Patentansprüche**

1. Eichverfahren für ein Steuersystem mit einer innerhalb eines bestimmten Bereiches beweglichen Steuervorrichtung (52), wenigstens einem Sensor (54), der die Lage der Steuervorrichtung (52) erfaßt, einer mit dem Sensor (54) in Verbindung stehenden Steuereinheit (50), die in Abhängigkeit von der erfaßten Lage der Steuervorrichtung (52) Steuersignale erzeugt, und mit wenigstens einem in Abhängigkeit von den Steuersignalen verstellbaren Betätigungsorgan (34) dadurch gekennzeichnet, daß die Steuereinheit (50) von einem Steueralgorithmus zur Steuerung des Betätigungsorgans (34) auf einen Eich- und Konfigurationsalgorithmus umgeschaltet wird, daß die Steuervorrichtung (52) über ihren ganzen Lagebereich bewegt wird, daß dabei eine automatische Bestimmung des Größenbereiches für das Lagesignal des Sensors (54), das dem Lagebereich der Steuervorrichtung (52) entspricht, erfolgt, daß die Steuereinheit (50) automatisch in Abhängigkeit des bestimmten Größenbereiches des Lagesignales des Sensors (54) eingestellt wird und daß der bestimmte Größenbereich des Lagesignales des Sensors (54) für die Verwendung bei der Ausführung des Steueralgorithmus bereitgestellt wird.

2. Eichverfahren nach Anspruch 1 für ein Steuersystem mit einer Steuereinheit (50), die Eingangssignale mehrerer Meßgrößensensoren (38, 51, 54, 56, 58, 60) auswertet und die entsprechend mehrerer von den Sensoren (38, 51, 54, 56, 58, 60) erfaßter Funktionen Steuersignale ausgibt, dadurch gekennzeichnet, daß automatisch festgestellt wird, welche Sensoren (38, 51, 54, 56, 58, 60) vorhanden oder nicht vorhanden sind, und daß entsprechend dem Fehlen eines Sensors (38, 51, 54, 56, 58, 60) automatisch die zugehörige Funktion des Steuersystems unwirksam gemacht wird.

3. Eichverfahren nach Anspruch 1 oder 2 unter Verwendung eines Steuersystems mit einer von einer Bedienungsperson einstellbaren Steuervorrichtung (52), einer beweglichen steuerbaren Einrichtung (26), einer als Betätigungsorgan dienenden Hydraulikeinheit (34) zum Bewegen der steuerbaren Einrichtung (26), einem Sensor (60) zur Erfassung der Lage der steuerbaren Einrichtung (26), einem durch eine Magnetspule betätigbaren, federvorgespannten Ventil (42) zur Steuerung des Durchflusses zu und von der Hydraulikeinheit (34) und einer Steuereinheit (50), die mit der Steuervorrichtung (52) und der Magnetspule in Verbindung steht, um die Magnetspule zu erregen, dadurch gekennzeichnet, daß zur Bestimmung eines Betrages des Spulenvorlaststromes, der erforderlich ist, um die Federvorspannung des Ventiles (42) zu überwinden, ein so hoher Strom an die Magnetspule angelegt wird, daß sich durch Öffnung des Ventils (42) die steuerbare Einrichtung (26) zu bewegen beginnt, und daß dann der an die Magnetspule angelegte Strom so lange schrittweise reduziert wird, bis die Geschwindigkeit der erfaßten Lageänderung der steuerbaren Einrichtung (26) unter ein bestimmtes Niveau abfällt, wobei der letzte reduzierte Strom als Vorlaststrom der Magnetspule angesehen wird.

4. Eichverfahren nach einem der Ansprüche 1 bis 3 unter Verwendung eines Steuersystems für eine Anhängevorrichtung (26), an der Arbeitsgeräte anbringbar sind, mit einem Betätigungsorgan (34) zum Bewegen der Anhängevorrichtung (26), einer durch eine Bedienungsperson bewegbaren Einstellvorrichtung (58) zur Einstellung der Geschwindigkeitsgrenze, einer durch eine Bedienungsperson bewegbaren als Steuerhebel (52) ausgebildeten Steuervorrichtung und mit einer Steuereinheit (50) zur Steuerung des Betriebes des Betätigungsorganes (34), derart daß die Anhängevorrichtung sich mit einer Geschwindigkeit bewegt, die einem Geschwindigkeitsgrenzwert entspricht, dadurch gekennzeichnet, daß zur Festsetzung des Geschwindigkeitsgrenzwertes die Steuereinheit (50) in eine Eichbetriebsart eingestellt wird, daß durch Einstellung des Steuerhebels (52) die Steuereinheit (50) und das Betätigungsorgan (34) veranlaßt werden, die Anhängevorrichtung (26) in eine Grenzlage zu bewegen, daß durch Einstellung des Steuerhebels (52) die Steuereinheit (50) und das Betätigungsorgan (34) veranlaßt werden, die Anhängevorrichtung (26) mit einer vorherbestimmbaren Standardgeschwindigkeit von der Grenzlage weg zu bewegen, und daß durch Nachstellen der Einstellvorrichtung (58) die Steuereinheit (50) auf einen gewünschten gegebenenfalls von der Standardgeschwindigkeit abweichenden Geschwindigkeitsgrenzwert eingestellt wird.

5. Steuersystem für eine Anhängevorrichtung (26) zur Durchführung des Eichverfahrens nach einem der Ansprüche 1 bis 4 mit einem als Betätigungsorgan dienenden hydraulisch betätigbaren Hubwellenzylinder (34) für die Bewegung der Anhängevorrichtung (26) und mit einer Steuereinheit (50) zur Steuerung des Betriebes des Hubwellenzylinders (34) in Abhängigkeit von der Bewegung einer von einer Bedienungsperson einstellbaren Steuervorrichtung (52) und in Abhängigkeit von durch Sensoren (38, 51, 54, 56, 58, 60) erfaßten Parametern, wobei ein Sensor (54) zur Erfassung der Lage der Steuervorrichtung (52) ausgebildet ist, dadurch gekennzeichnet, daß eine Umschalteinrichtung (72) zur Umschaltung zwischen einem Steuer- und einem Eichalgorithmus vorgesehen ist und daß die Steuereinheit (50) Mittel zur automatischen Bestimmung, Speicherung und Bereitstellung des Größenbereiches für das Lagesignal des Sensors (54), das dem einstellbaren Lagebereich der Steuervorrichtung (52) entspricht, enthält.

6. Steuersystem nach Anspruch 5, gekennzeichnet durch Mittel zur Speicherung von Parametern, die verschiedenen Volumen der Hubwellenzylinder (34) zugeordnet sind, Mittel zum Anzeigen bestimmter Indexwerte, die von der Lage der Steuervorrichtung (52) abhängen, und Mittel zur Auswahl bestimmter Parameter für die Verwendung durch das Steuersystem, wenn die Bedienungsperson die Steuervorrichtung (52) bewegt, um zu veranlassen, daß ein zugeordneter Indexwert auf einem mit der Steuereinheit (50) in Verbindung stehenden Display angezeigt wird.

**Claims**

1. Calibration method for a control system with a control device (52) movable within a determined range, with at least one sensor (54) which detects the position of the control device (52), with a control unit (50) connected to the sensor (54) and generating control signals in dependence on the detected position of the control device (52), and with at least one actuating unit (34) displaceable in dependence on the control signals, characterised in that the control unit (50) is switched over by a control algorithm for controlling the actuating unit (34) to a calibrating and configuring algorithm, in that the control device (52) is moved over its entire range of positions, in that thereby there takes place an automatic determination of the range of magnitude for the position signal of the sensor (54), corresponding to the range of positions of the control device (52), in that the control unit (50) is automatically set in dependence on the defined range of magnitude of the position signal of the sensor (54), and in that the defined range of magnitude of the position signal of the sensor (54) is made available for use in carrying out the control algorithm.

2. Calibration method according to claim 1 for a control system with a control unit (50) which evaluates the input signals of a plurality of magnitude-measuring sensors (38, 51, 54, 56, 58, 60) and, in accordance with a plurality of functions detected by the sensors (38, 51, 54, 56, 58, 60) emits control signals, characterised in that it is automatically ascertained which sensors (38, 51, 54, 56, 58, 60) are present or not present, and in that, in accordance with the absence of a sensor (38, 51, 54, 56, 58, 60) the associated function of the control system is automatically rendered ineffective.

3. Calibration method according to claim 1 or 2, using a control system with a control device (52) settable by an operator, with a movable controllable device (26), with a hydraulic unit (34) serving as an actuating unit for moving the controllable device (26), with a sensor (60) for detecting the position of the controllable device (26), with a spring-biassed valve (42) actuable by a magnet coil, for controlling the flow to and from the hydraulic unit (34), and with a control unit (50) in communication with the control device (52) and the magnet coil, in order to energise the magnet coil, characterised in that, in order to determine a proportion of the coil bias current which is necessary to overcome the spring bias of the valve (42), a current of such magnitude is applied to the magnet coil that, upon opening of the valve (42), the controllable device (26) begins to move, and in that the current applied to the magnet coil is then progressively reduced until the speed of detected position change of the controllable device (26) falls below a specific level, the last reduced current being regarded as the bias current for the magnet coil.

4. Calibration method according to one of claims 1 to 3, using a control system for a hitch device (26) upon which implements may be mounted, with an actuating unit (34) for moving the hitch device (26), with a setting device (58), movable by an operator, for setting the speed threshold, with a control device (52) in the form of a control lever movable by an operator, and with a control unit (50) for controlling the operation of the actuating unit (34), in such a way that the hitch device moves at a speed corresponding to a speed threshold value, characterised in that, in order to define the speed threshold value, the control unit (50) is set into a calibration mode, in that, by means of setting the control lever (52), the control unit (50) and the actuating unit (34) are caused to move the hitch device (26) into a threshold position, in that, by setting the control lever (52), the control unit (50) and the actuating unit (34) are caused to move the hitch device (26) at a predeterminable standard speed from the threshold position, and in that, after re-setting of the setting device (58), the control unit (50) is set to a desired speed threshold value, if necessary deviating from the standard speed.

5. Control system for a hitch device (26) for carrying out the calibration procedure according to one of claims 1 to 4, with a hydraulically-actuable lifting shaft cylinder (34), serving as an actuating unit, for moving the hitch device (26), and with a control unit (50) for controlling the operation of the lifting shaft cylinder (34) in dependence on the movement of a control device (52) settable by an operator, and in dependence on parameters detected by sensors (38, 51, 54, 56, 58, 60), one sensor (54) being designed to detect the position of the control device (52), characterised in that there is provided a switch-over device (72) for switching between a control and a calibration algorithm, and in that the control unit (50) includes means for automatically determining, storing and making available the magnitude range for the position signal of the sensor (54) which corresponds to the settable position range of the control device (52).

**6.** Control system according to claim 5, characterised by means of storing parameters associated with various volumes of the lifting shaft cylinders (34), by means for indicating specific index values which depend on the position of the control device (52), and by means for selection of specific parameters for use by the control system when the operator moves the control device (52) in order to cause an associated index value to be indicated on a display communicating with the control unit (50).

**Revendications**

**1.** Procédé d'étalonnage pour un système de commande avec un dispositif de commande (52) mobile dans une plage déterminée, au moins un capteur (54) qui détecte la position du dispositif de commande (52), une unité de commande (50) qui est reliée au capteur (54) et qui produit des signaux de commande en fonction de la position détectée du dispositif de commande (52), et avec au moins un organe d'actionnement (34) déplaçable en fonction des signaux de commande, **caractérisé** en ce que l'unité de commande (50) est commutée d'un algorithme de commande, pour la commande de l'organe d'actionnement (34), sur un algorithme d'étalonnage et de configuration, en ce que le dispositif de commande (52) est déplacé sur toute sa plage de positions, en ce qu'est alors effectuée une détermination automatique de la plage de valeurs pour le signal de position du capteur (54), qui correspond à la plage de positions du dispositif de commande (52), en ce que l'unité de commande (50) est réglée de façon automatique en fonction de la plage déterminée de valeurs du signal de position du capteur (54), et en ce que la plage déterminée de valeurs du signal de position du capteur (54) est mise à disposition pour être utilisée lors de l'exécution de l'algorithme de commande.

**2.** Procédé d'étalonnage selon la revendication 1, pour un système de commande avec une unité de commande (50) qui évalue les signaux d'entrée de plusieurs capteurs de valeurs de mesure (38, 51, 54, 56, 58, 60) et qui délivre des signaux de commande conformément à plusieurs fonctions détectées par les capteurs (38, 51, 54, 56, 58, 60), **caractérisé** en ce qu'on détermine de façon automatique lesquels des capteurs (38, 51, 54, 56, 58, 60) sont présents ou non, et en ce que, suite à l'absence d'un capteur (38, 51, 54, 56, 58, 60), la fonction associée du système de commande est rendue inactive.

**3.** Procédé d'étalonnage selon la revendication 1 ou 2, lors de l'utilisation d'un système de commande avec un dispositif de commande (52) réglable par un opérateur, un équipement mobile asservissable (26), une unité hydraulique (34) servant d'organe d'actionnement pour déplacer l'équipement asservissable (26), un capteur (60) pour détecter la position de l'équipement asservissable (26), une valve (42), précontrainte par ressort et pouvant être actionnée par une bobine électromagnétique, pour la commande du passage de flux vers et en provenance de l'unité hydraulique (34), et une unité de commande (50) qui est reliée au dispositif de commande (52) et à la bobine électromagnétique, afin d'exciter la bobine électromagnétique, **caractérisé** en ce qu'afin de déterminer la valeur du courant de précharge de la bobine qui est nécessaire pour surmonter la précontrainte de ressort de la valve (42), on applique à la bobine électromagnétique un courant suffisamment élevée pour que l'équipement asservissable (26) commence à se déplacer par ouverture de la valve (42), et en ce qu'on réduit ensuite progressivement le courant appliqué à la bobine électromagnétique, pendant une durée suffisante pour que la vitesse de la modification détectée de position de l'équipement asservissable (26) tombe en dessous d'un niveau déterminé, le dernier courant déduit étant retenu comme courant de précharge de la bobine électromagnétique.

**4.** Procédé d'étalonnage selon l'une quelconque des revendications 1 à 3, lors de l'utilisation d'un système de commande pour un dispositif d'attelage (26) auquel peuvent être attelés des équipements de travail, avec un organe d'actionnement (34) pour déplacer le dispositif d'attelage (26), un dispositif de réglage (58) pouvant être manoeuvré par un opérateur pour régler la limite de vitesse, un dispositif de commande réalisé sous la forme d'un levier de commande (52) pouvant être manoeuvré par un opérateur, et avec une unité de commande (50) pour commander le fonctionnement de l'organe d'actionnement (34) de façon que le dispositif d'attelage se déplace à une vitesse correspondant à une valeur limite de vitesse, **caractérisé** en ce qu'afin de déterminer la valeur limite de vitesse, on règle l'unité de commande (50) dans un mode de fonctionnement d'étalonnage, en ce qu'en manoeuvrant le levier de commande (52), on fait en sorte que l'unité de commande (50) et l'organe d'actionnement (34) déplacent le dispositif d'attelage (6) dans une position limite, en ce qu'en manoeuvrant le levier de commande (52), on fait en sorte que l'unité de commande (50) et l'organe d'actionnement (34) éloignent le dispositif d'attelage (26) de la position limite avec une vitesse standard prédéterminable, et en ce qu'en rajustant le dispositif de réglage (58), l'unité de commande (50) est réglée à une valeur limite de vitesse souhaitée, éventuellement divergente de la vitesse standard.

5.  Système de commande pour un dispositif d'attelage (26), pour la mise en oeuvre du procédé d'étalonnage selon l'une quelconque des revendications 1 à 4, avec un vérin d'arbre de levage (34) à actionnement hydraulique, servant d'organe d'actionnement pour le déplacement du dispositif d'attelage (26), et avec une unité de commande (50) pour la commande du fonctionnement du vérin d'arbre de levage (34) en fonction du déplacement d'un dispositif de commande (52) manoeuvrable par un opérateur et en fonction de paramètres enregistrés par des capteurs (38, 51, 54, 56, 58, 60), un capteur (54) étant conçu pour détecter la position du dispositif de commande (52), **caractérisé** en ce qu'il est prévu un dispositif de commutation (72) pour la commutation entre un algorithme de commande et un algorithme d'étalonnage, et en ce que l'unité de commande (50) comprend des moyens pour, de façon automatique, déterminer, mémoriser et mettre à disposition la plage de valeurs pour le signal de position du capteur (54) qui correspond à la plage réglable de positions du dispositif de commande (52).

6.  Système de commande selon la revendication 5, **caractérisé** par des moyens pour mémoriser des paramètres qui sont associés à différents volumes des vérins d'arbre de levage (34), des moyens pour afficher des valeurs d'index déterminées, qui sont fonction de la position du dispositif de commande (52), et des moyens pour sélectionner des paramètres déterminés à utiliser par le système de commande lorsque l'opérateur manoeuvre le dispositif de commande (52), afin de faire en sorte qu'une valeur d'index associée soit affichée sur un dispositif d'affichage relié à l'unité de commande (50).

Fig. 1

**Fig. 2**

DRAFT 38
POS. LMT. 51
LEVER 54
MIX 56
DROP 58
POS. 60
70
72

A/D 502
LATCH 504
EEPROM 506

MP 508

DISPLAY 510

DRIVER 512
DRIVER

50

34

42a V
42b V